Europäisches Patentamt

(19) European Patent Office

Office européen des brevets

(11) EP 1 264 224 B1

(12) EUROPEAN PATENT SPECIFICATION

(45) Date of publication and mention
of the grant of the patent:
28.04.2004 Bulletin 2004/18

(21) Application number: 01911877.7

(22) Date of filing: 12.03.2001

(51) Int Cl.⁷: **G05B 17/02**

(86) International application number:
**PCT/GB2001/001079**

(87) International publication number:
**WO 2001/067189 (13.09.2001 Gazette 2001/37)**

(54) **PROCESS CONTROL SYSTEM**

PROZESSSTEUERSYSTEM

SYSTEME DE COMMANDE DE PROCESSUS

(84) Designated Contracting States:
**AT BE CH CY DE DK ES FI FR GB GR IE IT LI LU
MC NL PT SE TR**

(30) Priority: **10.03.2000 GB 0005866**

(43) Date of publication of application:
**11.12.2002 Bulletin 2002/50**

(73) Proprietor: **Borealis Technology Oy
06101 Porvoo (FI)**

(72) Inventors:
• **ANDERSEN, Ketil, Strand
N-3960 Stathelle (NO)**
• **WILSHER, Erik
N-3960 Stathelle (NO)**
• **HILLESTAD, Magne
7053 Trondheim (NO)**
• **HAUGER, Svein, Olav
7053 Trondheim (NO)**

(74) Representative: **Jackson, Robert Patrick
Frank B. Dehn & Co.,
European Patent Attorneys,
179 Queen Victoria Street
London EC4V 4EL (GB)**

(56) References cited:
**US-A- 5 687 090**

• **I.TRELEA ET AL: "DYNAMIC ANALYSIS AND
CONTROL STRATEGY FOR A MIXED FLOW
CORN DRYER" J.PROCESS CONTROL, vol. 7,
no. 1, February 1997 (1997-02), pages 57-64,
XP000972393 UK**
• **G.ALAG ET AL: "DEVELOPMENT OF CONTROL
LAWS FOR A FLIGHT TEST MANEUVER
AUTOPILOT FOR AN F-15 AIRCRAFT"
PROCEEDINGS OF THE 1985 AMERICAN
CONTROL CONFERENCE, vol. 3, 19 June 1985
(1985-06-19), pages 1209-1210, XP000955304
USA**
• **C.GARCIA ET AL: "MODEL PREDICTIVE
CONTROL :THEORY AND PRACTICE A
SURVEY" AUTOMATICA, vol. 25, no. 3, May 1989
(1989-05), pages 335-348, XP000972373 UK cited
in the application**
• **D.THOMPSON ET AL: "QUANTITATIVE
FEEDBACK DESIGN FOR A VARIABLE
DISPLACEMENT HYDRAULIC VANE PUMP"
PROCEEDINGS OF THE AMERICAN CONTROL
CONFERENCE, vol. 2, 4 June 1997 (1997-06-04),
pages 1061-1065, XP000955302 USA**

**Description**

This invention relates to a control system, especially one for use in the control of industrial plant such as a polymerisation reactor.

Many different types of control system are known. The simple "classical" control system comprises a single input and a single output (SISO), for example a flow controller. In such a controller, only one variable is controlled, namely the flow through a valve, which is then called the controlled variable (CV). A setpoint is entered to tell the controller what the desired flow is. A flow measurement is also applied as input to tell the controller about the actual flow. The controller will compare the actual flow with the setpoint, and use the deviation to calculate, using previously defined equations, the value for the manipulated variable (MV), which in this case is the valve position. This is then output from the controller.

Here the controller action is based on the observed deviation in the controlled variable. An important part of the equations used to calculate the manipulated variable from the deviations is the set of tuning parameters that will modify the properties of the control algorithm.

However, in more complex processes there may be many variables to consider which may be interdependent on each other such that altering one variable inevitably effects more than one response. Such effects are termed "couplings" or "interactions" between the variables. Furthermore, non-linear responses to manipulated variables may also be a characteristic behaviour of the process. SISO controllers do not have the ability to control such processes efficiently because they are unable to compensate for couplings and because parameter values tuned for one set of process conditions may not work at all for other process conditions.

To address these problems, more complex control systems called advanced process control (APC) are used. One example of APC is model based predictive control (MPC). Here, a computer model of the process which is to be controlled is applied as a part of the controller. The model contains information regarding the effect of manipulated variables on the controlled variables and may also include the interactions, described in terms of mathematical equations. APC controllers are implemented as programs on computers connected to the process control system. They are generally arranged to receive signals and values from process measurement devices and to send control signals, for example, setpoints for flow controllers, and calculated values to the process control system.

There are several types of MPC controllers available which are based on different approaches applied to the to model based predictive control algorithm, see for example "Model Predictive Control: Theory and Practice - A Survey", Automatica, vol. 25 No. 3, pp335-348, 1989.

The control objectives are in general to provide consistent and stable process conditions, for example to provide stable concentrations of components, stable temperature, pressure, etc. The objective of a MPC control system is to detect changes in the measured input conditions to the unit, e.g. feeds, concentrations, temperatures, etc., and differences between conditions actually measured inside or after the unit and the corresponding model calculated values, and to perform control actions to compensate for these disturbances and deviations. For example, if the flow of an ingredient to the reactor is measured and a drop in its flow rate is detected, compensatory changes to the reactor conditions will be needed to prevent this from having an effect on one or more controlled variables.

Alternatively, some processes such as polymerisation reactors are designed to run continuously even though they may be used to produce different products. In order to change from one product to another, the reactor conditions etc. are changed as appropriate. A change from one grade of polymer to another in this manner is termed a "grade transition". Here, it is desired to make the transition as rapidly as possible because the intermediate product would be "off-spec" (off-specification) product.

The models in a general MPC system can be either empirical or fundamental models. Empirical models are based on data from the actual plant created by e.g. making multivariable regression between process input (u and v) and output y, while fundamental dynamic models are deduced from first principles like conservation of mass, energy and momentum, balance equations, reaction kinetics, etc.

The most common MPC controllers are based on empirical models, see "Dynamic Matrix Control - a computer control algorithm", AIChE National Mtg, Houston, Texas (1979). The reason for this is that for simple processes, like distillation columns where the operating conditions are almost the same all the time, these kind of models are easy to create and operate. However, for more complex units like polymerisation reactors, empirical models have been found to be problematic. There are several reasons for this in the case of polymerisation reactors: many variables show a very nonlinear behaviour; many variables are strongly coupled or interdependent; the region the reactor is operated within is large and the reactor conditions are also frequently changed, due to grade transitions. The last is the situation where production of one product at one set of reactor conditions is completed and the reactor conditions are changed to start to produce another product with different properties.

Making empirical models for such a process, requires a lot of step response tests in the actual plant, doing one step change for every manipulated variable and for every disturbance that will be included in the model. Separate step response tests also have to be made for every coupling effect that is to be modelled. In practise, making step response tests on a polymerisation reactor is very expensive because it normally takes 2-4 residence times to measure the complete response of a step change in a MV and if any event in the process disturbs the test, the test has to be started all over again. The process also has to be reasonably stable when starting the test, introducing changing inputs that will change the stable situation. Step changes also have to be made on the actual production unit, where stable conditions giving consistent product quality should not be disturbed. Also each product often has a separate model, because due to the nonlinear behaviour of the process, the controller using a linearised model will not work for any other model than the one created with the actual set of conditions where the step test for that specific product was made.

In view of the above problems, it would be advantageous to use fundamental model based MPC in such applications. As discussed in "Model Predictive Control for Grade Transitions of a Polypropylene Reactor", 4th European Symposium on Computer Aided Process Engineering, Dublin 1994, fundamental dynamic models together with a MPC algorithm should give a more efficient solution, both with respect to implementation costs and to control performance.

An example of a fundamental control model can be found in "Dynamics analysis and control strategy for a mixed flour corn dryer", Trelea et al (J. Process Control, Vol. 7 No. 1, February 1997 pages 57-64). This document discloses a method for controlling the final moisture content of corn from a corn dryer.

This method involves deriving a first principle non-linear equation, using a transformation to linearise this equation and using the resulting linearised equation to control the system. The same linearised model is used throughout the process.

However, in practice, computing power will limit the possibilities of using fundamental models when the number of CV's, MV's and constraints are significant, which is often the case. Thus, to take the example of a polymerisation reactor, the necessary complexity of the model is such that, when using any practicable amount of computing power, the time taken to solve the model will be excessive because it will limit the frequency at which the model may be used and because there will be introduced a significant lag between the determination of the input conditions and the determination of the solution - in the meantime the conditions may have changed considerably leading to significant stability problems.

According to the invention there is provided a method of controlling a process comprising the steps of:

a) generating a first-principle model corresponding to the process;
b) inputting data describing the current and desired future process conditions;
c) using said data, generating a linear approximation to the model which is valid for said current conditions;
d) using said linear approximation to determine an approximate solution to a control problem related to the process;
e) controlling the process using said approximate solution; and
f) repeating steps (b) to (e).

Thus the invention is able to provide an accurate model of the process because it is based on first principles, i.e. it is a fundamental model rather than being an empirical approximation. It may be non-linear if necessary and is valid over a wide range of operating conditions. The significant inaccuracy inherent in a linear-approximation model is thereby avoided. However, the invention is advantageous compared to conventional and non-linear model based systems because it does not directly solve each of the non-linear equations of the model each time it is required to make a prediction. Rather, for a given set of conditions applying at a given time, a linear approximation is then used to determine an appropriate solution to a control problem. This linear approximation is preferably generated by numerical perturbation of the model and may result in a quadratic programming problem. This may of course be solved far more quickly than the full non-linear model and so a future scenario may be rapidly determined. The process may then be controlled in the convention manner by the generation of new set points.

Thus the invention is able to combine the accuracy and operating range of a fundamental model with the speed and the effectiveness of a linear model so that an efficient process control system is achieved.

In some applications the approximate solution may be sufficiently accurate to be used directly in controlling the process. However, preferably the approximate solution is used to determine a more precise solution. This may typically be done by substituting the approximate solution into the model and then using a process of iteration. The iterative process may be repeated as often as required to determine a solution of sufficient precision.

In preferred forms of the invention the fundamental first-principle model is then used to calculate the actual responses of the control moves so that the response of the future scenario is the result of the fundamental model, and not of the simplified, linearised model.

In simple applications the calculated linear approximation may be sufficiently accurate to be used for a number of different process conditions. However, to enable the invention to control more complex systems it is preferred that the linear model be recalculated, e.g. for each new set of reactor conditions. Thus a new linearised model will be created when required. It will be appreciated that in many applications such models may be created at very frequent intervals.

One of the important benefits of the fundamental models used in this context is that they may be valid and consistent over a wide operating window. This means that the same model and model parameters can cover a wide range of production conditions such as those which follow production of different polymer grades. Thus preferably the controller can actually control the transition itself, moving the process conditions from one set to another set of conditions, to produce a different product. When the model calculated values are sufficiently accurate and close to the actual behaviour of the process unit, the calculated set of MV's from the method of the invention are very close to the optimal way of changing the conditions.

This is highly advantageous compared to the normal situation for empirical model based controllers where it is often necessary to perform the transition manually and then continue with MPC control when the transition is complete using another process model. Thus, the invention may be used to facilitate a faster grade transition, i.e. to achieve stable process condition with the required product properties, hence reducing loss of money related to lost production and off-spec product.

The invention also extends to a control apparatus for controlling a process comprising a controller, input and output means and a model, wherein:

   a) said model is a fundamental model corresponding to the process;
   b) means is provided for repeatedly inputting data describing the current and desired future process conditions;
   c) means is provided for calculating a linear approximation to the model which is valid for each of said input conditions;
   d) means is provided for using each said linear approximation to determine an approximate solution to a control problem related to the process;
   e) means is provided to generate output signals for controlling the process using the solution of part (d) above.

Preferably the apparatus is arranged to be operated in accordance with the preferred forms of the method discussed above.

The invention also extends to a process or apparatus controlled by such a method of the invention or apparatus of the invention as discussed above. Furthermore, the invention extends to a model and/or controller comprising software stored on an appropriate data carrier.

The controller and model are typically implemented using microprocessor based computing. apparatus.

An embodiment of the invention will now be described, by way of example only, and with reference to the following drawings:

Figure 1 : a flow chart of the overall controller configuration of an embodiment of the invention;
Figure 2 : a flow chart of the controller structure used in the embodiment;
Figures 3 and 4 are flow diagrams showing the steps the are performed by the controller part of the embodiment;
Figure 5 : a graph illustrating pumping power from a reactor illustrating the improvement in stability obtained by use of the invention compared to conventional SISO control; and
Figures 6 to 11: are various graphs illustrating simulations of the effects of using embodiments of the invention.

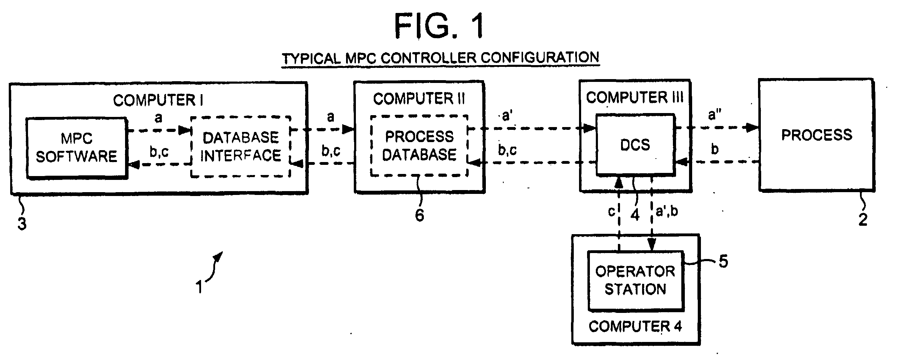

The embodiment is implemented using a control system having the type illustrated in Figure 1 which is known in general terms and contains a mathematical model of the process.

The controller 1 is a computer software based system which may be executed upon commercially available computers. However, as discussed below, the operation of the model is significantly different from the standard system.

Figure 1 shows the overall flow of information from a process 2 which comprises one or more process units, like a reactor, to computer I (ref 3) where MPC software is installed. Measurements from the process are collected in the basic control system 4 (DCS) which will typically contain all the basic controllers needed for flow control, temperature and pressure control, etc. These are implemented as classical SISO controllers. A subset of these measurements which are needed for the APC controller, is called b. All the measurements, including b, are available in the operator station 5, in displays and trends. Typically, operator interface for the MPC controller is also implemented as a display (not illustrated) on the operator station 5.

In this display, the operator can view calculated output and information from the MPC controller and also enter information to the MPC controller, like setpoints for the controlled variables/objectives, high and low limits for constrained controlled or manipulated variables, select controller on/off or select the actual variables to control, etc.

The set of information to the MPC controller from the operator, is called c in figure 1. This information is transferred from the operator station 5 to the DCS system 4. The information needed by the MPC, i.e. b and c, is transferred from the DCS system to the process database system 6, which provides long time storage of data and which has proprietary library routines which are used to read data from or write data to the database, available.

The MPC controller reads data, i.e. b and c, from the database system, optionally using interface software which is developed using the proprietary routines applied as a part of the database system. It is also possible to make data, i.e. b and c, available to the MPC controller, receiving the data directly from the DCS system or from the operator station 5, replacing the database interface software based on database routines with interface routines the can exchange data directly to and from the DCS system 4 or operator station 5. It is also possible to implement the operator display used to display and/or enter data for the MPC on Computer II using tools provided by the database system itself or by other tools instead of doing this on the operator station 5.

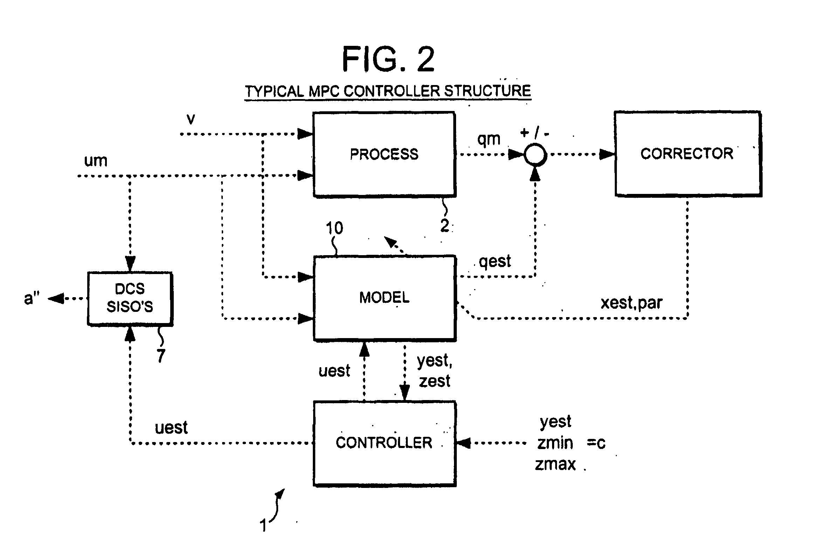

The MPC controller uses the measured inputs from the process together with the model and its internal controller algorithms to calculate the MPC outputs called a. These typically consist of model predicted responses and the values for the manipulated variables which will be transferred to the database system 6, and a subset of these data, a', also further to the DCS system 4, at least the calculated values for the manipulated variables and optionally some calculated responses and information about MPC controller status. The calculated values for the manipulated variables are then transferred as new setpoints to SISO controllers in the DCS system 7 (Fig. 2) to implement the result of the MPC control.

Figure 2 illustrates the MPC controller structure. The measurements concerning the process 2, called b in fig.1, consist of the subsets um, v and qm. um is the measured values of the MV's, v is the measured disturbances from the process and qm is the measured responses from the process. The data (yest, zmin, zmax) called c in fig.1 is the input from the operator at operator station 5 (Fig. 1), and consists of setpoints for the CV's and minimum and maximum limits for the constrained responses to be controlled by the MPC. um and v are experienced by the process 2, and also given into the model 10, which will calculate the responses qest. Some responses are also measured, qm, and model correction is made from comparison of the corresponding qest and qm values. The controller will use the present updated model as a part of the control algorithm to calculate the MV's called uest. This control algorithm predicts the future behaviour of the process using the model 10, and calculates the MV's that will give the least sum of deviations between CV setpoints and predicted values. The MV's, which are output from the optionally multivariable MPC controller are actually input/setpoints to the DCS system SISO controllers 7, which will generate control signals to valves, heaters, engines, etc., to minimise the deviation between the uset value and the um value.

As previously discussed, the system incorporates a model 10 of the process which is a fundamental model. It includes submodels for reaction kinetics, product quality or properties, which can be used to calculate the effect from disturbances or changes in the input to the unit(s) to the responses of the process in terms of controlled variables, constrained responses or other calculated outputs. This model is a state space model (as described in the Dublin Symposium paper mentioned above). The structure of the calculations used comprise three steps :

    i) integrate the model equations over the sampling time, achieving new values for the state vector.
    ii) calculate model output (calculated measurements) from the new state vector values.
    iii) calculate values for CV's and constrained responses from the new state vector values.

The state vector contains elements carefully selected based on the criteria of having an unique description of the information of the content of the reactor, that is relevant for the control purpose and that contain no redundancies.

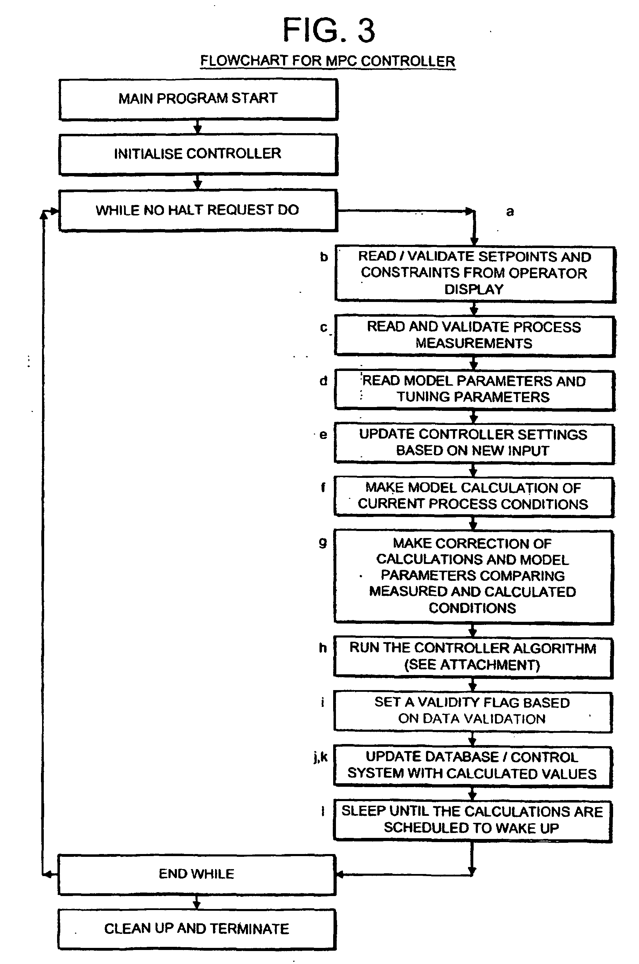

This model is implemented as a software unit comprising a complete set of software modules. This set of modules effects the control of process unit(s) by means of the following steps which are summarised in Figure 3;

    a) Running this software unit at a predefined sampling rate selected as appropriate for the actual process unit, e.g. once every minute. Steps (b) to (1) below are then performed:-
    b) Retrieve input entered by the operator which specifies the setpoints for the controlled variables, the high and low limits for the constrained responses, the high and low limits for the manipulated variables, the maximum rate of change for the manipulated variables values, the selections for what variables that will be controlled by this software unit, the relative weights/importance between the different controlled variables, the relative penalties for using the different manipulated variables, or retrieving some or all of these values from a file or other data storage, and also testing the validity and consistency of these values before using them in the control method.
    c) Retrieve measurements from the process unit caused by dedicated parts of the software that has been made for this purpose, and also testing the validity and consistency of these measurements.
    d) Retrieve model parameters and tuning parameters for the model correction algorithms to be used and for the controller algorithm to be used as a part of the method.
    e) Update all the settings used by the controller based on the new input read from the DCS or database system or from files or other storage devices.
    f) Use the values collected in accordance with c) to make calculations with the model in accordance to steps i) to iii) above, to calculate the current conditions in the process unit(s) and the current values of the controlled variables, the constrained responses and the calculated output from the model. This step is called 'prediction' (of current conditions).

g) Make corrections of the model parameters and present values for the process conditions (states) using a correction algorithm and the observed deviations between the outputs calculated by the model and corresponding values available as measurements from the actual process, to eliminate these deviations. This step is called 'correction' (often also referred to as 'estimation') and ensures that the model is in accordance with the actual process.

h) Use the controller algorithm (as described in steps h1 to h8 below) to calculate values to be assigned to the MV's, to minimise the (sum of) deviation(s) between the controlled variables and their respective setpoints calculated for a specified as a time period into the future, also called horizon, whereas the constrained responses are kept within their defined limits. This step if called 'control'.

i) Check the results of the calculation done as described above and to set appropriate control flags in accordance with these checks.

j) Send the results of the calculations concerning dataset a in fig. 1 to the database system to store them for use as plant information data to create reports or trends.

k) Send the results of the calculations from the previous steps, called a', directly or indirectly to the DCS system, where the values for new setpoints for DCS controllers are made available for said controllers and actually used as setpoints. The DCS controlled will then create control signals, called a", to the control apparatus in the process based on the deviation between the present measurement and the new setpoint, to minimise the said deviation.

l) Let the software unit wait (doing nothing) until the sampling control or execution frequency control find that it is time to start all over from step a) so that the control method is executed at regular sampling intervals.

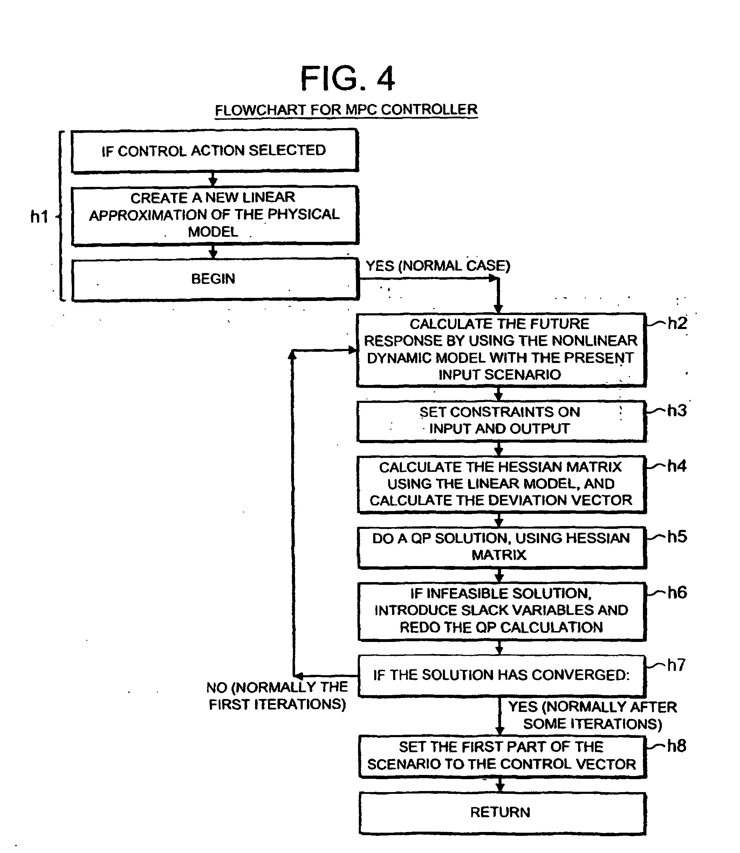

The control algorithm as used in step h) above, comprises the following steps (which are summarised in Figure 4):

h1) The algorithm is started in response to a control action. A linear approximation to the (first principle) model is then generated corresponding to the input conditions by numerical perturbation of the model. The prediction horizon is partitioned into a number of predefined so called blocked intervals. For every interval, the MV's are given values in accordance with the current values of the MV's. This is called the input scenario.

h2) The future response, i.e. the predicted values for the controlled variables and constrained responses, is calculated by using the fundamental model based on the present input manipulated variable scenario. The fundamental model is integrated using the input scenario which was the result of the calculation of the control problem from the previous sample.

h3) Set constraints on input and output - i.e. the minimum and maximum allowed values of the manipulated variables and controlled variables are set.

h4) Calculate the Hessian matrix in the manner known in the art and a vector defining the deviation between the predicted and the wanted (reference) values of the controlled variables.

h5) Solve the control problem that is formulated as a quadratic programming problem (QP) using the linear approximation to the fundamental model.

h6) If infeasible solution introduce slack variables and redo the QP problem - here values outside the maximum and minimum values set for the control variables may be used.

h7) It will be appreciated that steps h5 to h7 provide an iteration process which ensure that the approximate model solution is optimal in accordance with the (first principle) model. If the solution has converged, i.e. if the new itteration does not improve the result compared to the non-linear model, proceed to h8) else to h1)

h8) Set the first part of the input scenario to the control vector in order to implement the result.

Two examples of applications of the invention are given below:-

Example 1

The present invention has been implemented to control the pumping power for two reactors in series. The content of the reactors is liquid propylene and polypropylene (PP) polymer. The amount of solid PP will decide the viscosity of the slurry and therefore the amount of energy needed to pump the slurry sufficiently to avoid settling and formation of lumps, and to distribute monomer (propylene) and catalyst system components that are fed into the reactor slurry, and thus its pumping power.

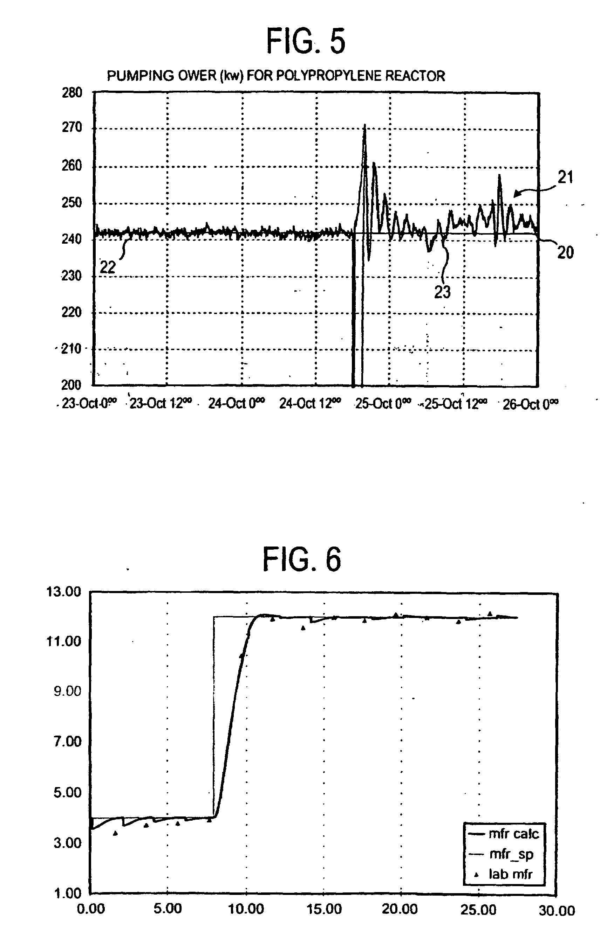

To stabilise the reactor, the amount of solids have to be kept constant. Solids are controlled with the polypropylene feed. The problem with controlling the amount of solids with normal control systems is that the dynamics of the process make it difficult to tune conventional controllers so that they give stable solid content for all possible conditions and operating ranges for the process. However, with the present MPC algorithm, this effect can be predicted and compensated for so that the stability of the loop is significantly improved. Figure 5 shows how the measured pumping power behaves. The set point for pumping power is shown by the straight line 20. The actual pumping power as measured is shown by line 21 with the controller in service (first part, ref 22) compared to conventional control after the controller has been stopped (second part, ref 23). As may be seen, there is a significant improvement in the stability of the control parameter with the controller in service.

Example 2

The present invention has been implemented to control the melt flow rate (MFR), the production rate (Rp) and the slurry density (Dens) of a continuous polypropylene reactor. The MFR is related to the polymer molecular weight of the polymer produced and is used as an important index for the product grade. The manipulated variables are feed of hydrogen (uh), the catalyst (ucat) and the propylene(up). The hydrogen is used to control the MFR, but the concentration of H2 in the reactor also influences the catalyst activity. So to change the MFR, H2 feed has to be changed, but to keep also the rate on its setpoint, catalyst feed has also to be changed. The slurry density is related to the amount of polymer in addition to propylene liquid in the reactor. To control the density, feed of propylene (liq) is changed. Increased feed of propylene also has the effect that the H2 and catalyst in the reactor is flushed out.

The model of this reactor will include a state vector which contains the following elements

1 amount of catalyst in the reactor
2 amount of propylene in the reactor
3 amount of polypropylene in the reactor
4 amount of hydrogen in the reactor
5 mean molecular weight (or related parameter) for polymer in the reactor

For each of these elements, the model will calculate te rate of change :

$$dx(1)/dt = wcatin - wcatout$$

$$dx(2)/dt = wpin - Rp - wpout$$

$$dx(3)/dt = Rp - wPPout$$

$$dx(4)/dt = wh2in - Rh - wh2out$$

$$dx(5)/dt = Rp/x(3)*(f - x(5))$$

where

| | |
|---|---|
| wcatin = | catalyst feed |
| wcatout = | catalyst flow out of the reactor |
| wpin = | propylene feed in |
| Rp = | propylene polymerisation rate from a kinetic model |
| wpout = | propylene flow out of the reactor |

| | |
|---|---|
| wPPout = | polypropylene flow out of the reactor |
| wh2in = | hydrogen feed in |
| Rh = | hydrogen consumption rate |
| wh2out = | hydrogen flow out of the reactor |
| f = | molecular weight (or related parameter) for polymer produced instantaneously |

To calculate the current states in the reactor, the state vector is integrated over the sampling time :

$$\chi_{current} = \chi_{previous} + \int_{0}^{t_s} f(x,u,v,t)\,dt$$

where x is the state vector and $t_s$ is the sampling time for the controller and f(x) for e.g. state number 5 is the equation above

$$f(5) = \frac{R_p}{\chi(3)}\,(g(MFR_i) - \chi(5))$$

where $g(MFR_i)$ is a function of the instantaneous MFR for the polymer, like LN(MFR) or $MFR^{-0.314}$, calculated by a separate formula. x(3) is the amount of polymer i the reactor. Rp is the production rate calculated by a kinetic model in the module containing the kinetic expressions,

$$Rp = Ap * mc * xp * a * f1(T) * f2(D) * f3(H)$$

where
    Ap is the rate constant
    mc is the amount of catalyst in the reactor
    xp is the concentration of propene in the reactor a is the activity of the catalyst
    f1(T) is the temperature dependency, e.g. Arrhenius equation
    f2(D) is the dependency of the amount of cocatalyst (donor)
    f3(H) is the dependency of hydrogen
This is done by numerical integration. The model calculated values for the CV's, are then deduced from the state vector, e.g. to control the rate and MFR

| | |
|---|---|
| y(yRate) = | Rp |
| y(yMFR) = | MFR calculated from molecular weight (or related parameter) |

These are the controlled with respect to their setpoints. Calculated values used for updating are also calculated from the state vector:

| | |
|---|---|
| q(qRate) = | Rp |

q(qMFR) =   MFR calculated from molecular weight (or related parameter)

where rate parameter for the kinetic model q-Rate is updated based on the difference between q-calculated and q_measured, e.g.

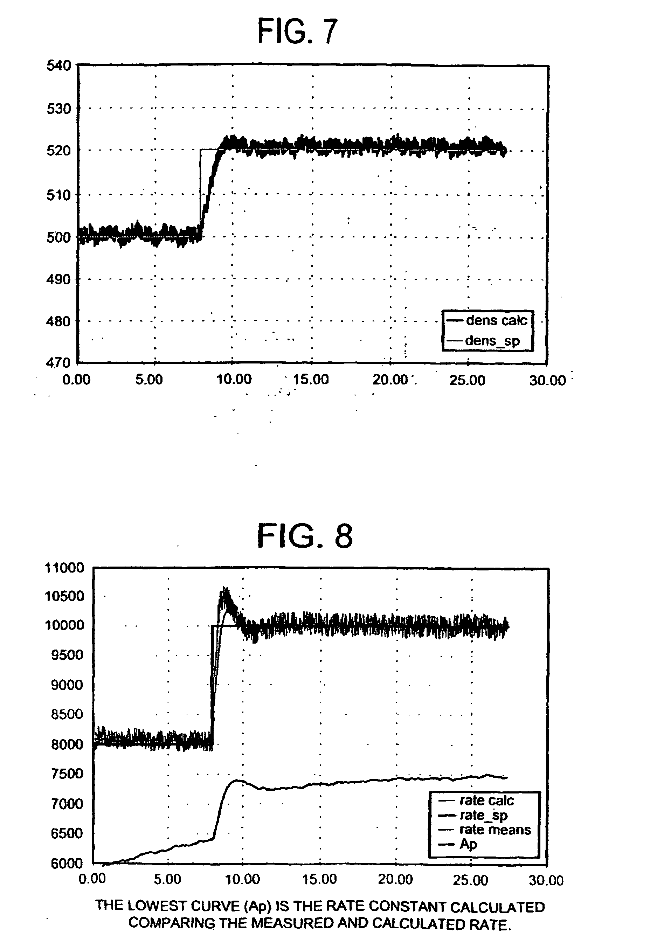

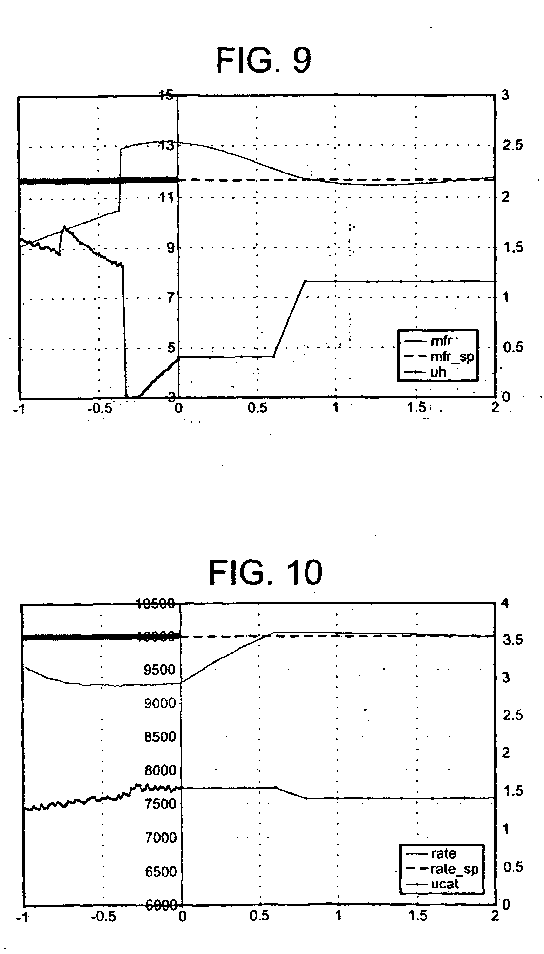

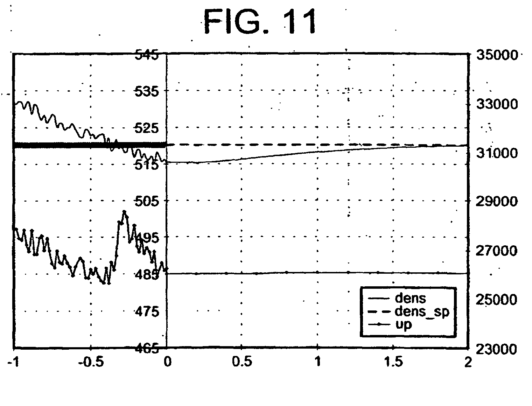

Ap = Ap + g* (q_measured-q_calculated) /q_measured When this method is executed online, the result is as represented in fig. 6, fig. 7 and fig. 8, where the CV's are MFR (fig. 6), slurry density (fig. 7) and production rate (fig. 8). A grade transition is made from MFR=4 to MFR=12, and at the same time, slurry density setpoint is changed from 500 to 520 kg/m$^3$ and production rate setpoint is changed from 8000kg/h to 10000 kg/h. The future predictions are presented in the so called future graph display, where the expected behaviour of the CV's in the near future is presented. Fig. 9 shows the predicted behaviour of the MFR (line A). The discontinuity is due to updating of the value based on a result from the laboratory. The line B is the operator setpoint for the desired value. Line C is showing how the controller wants to manipulate the hydrogen feed to achieve the correct MFR. Time=0 is the current time. To the left, the history is trended, showing actual values, while to the right the future is trended, showing predicted (calculated) values. The same graphs are also shown for production rate (fig. 10) and slurry density (fig. 11). This is showing a true multivariable controller.

**Claims**

1. A method of controlling a process (2) comprising the steps of:

   a) generating a first-principle model (10) corresponding to the process;
   b) inputting data (b, c) describing the current and desired future process conditions;
   c) using said data, generating a linear approximation to the model which is valid for said current conditions;
   d) using said linear approximation to determine an approximate solution to a control problem related to the process;
   e) controlling the process using said approximate solution; and
   f) repeating steps (b) to (e).

2. A method as claimed in claim 1, wherein the model (10) is non-linear.

3. A method as claimed in claim 1 or 2, wherein the linear approximation is generated by numerical perturbation of the model (10).

4. A method as claimed in claim 3, wherein the linear approximation provides a quadratic programming problem which is solved to determine the approximate solution to the control problem.

5. A method as claimed in any preceding claim wherein the approximate solution thereby determined is used to determine a more precise solution.

6. A method as claimed in any preceding claim wherein the first-principle model (10) is used to calculate a control response.

7. A method as claimed in any preceding claim wherein the generation of linear approximation to the model (10) is repeated as required using new input data.

8. A method as claimed in any preceding claim wherein the process (2) is a polymerisation process.

9. A method as claimed in claim 8 wherein the process (2) comprises a transition from the production of a first grade of polymer to a second grade of polymer, the transition being controlled automatically.

10. A control apparatus for controlling a process (2) comprising a controller (1), input and output means and a model (10), wherein:

    a) said model is a fundamental model corresponding to the process;
    b) means is provided for repeatedly inputting data describing the current and desired future process conditions;
    c) means is provided for calculating a linear approximation to the model which is valid for each of said input conditions;
    d) means is provided for using each said linear approximation to determine an approximate solution to a control problem related to the process;
    e) means is provided to generate output signals for controlling the process using the solution of part (d) above.

11. A control apparatus for controlling a process which is arranged to operate according to the method of any of claims 1 to 9.

12. A process for producing a product which uses the method and/or apparatus of any preceding claim.

**Patentansprüche**

1. Verfahren zum Steuern eines Prozesses (2), das die folgenden Schritte umfasst:

   a) Erzeugen eines den Prozess entsprechenden Modells (1) eines ersten Prinzips;

b) Eingeben von Daten (b, c), die die momentanen und die gewünschten künftigen Prozessbedingungen beschreiben;

c) Erzeugen einer linearen Approximation an das für die momentanen Bedingungen gültige Modell unter Verwendung der Daten;

d) Verwenden der linearen Approximation, um eine approximative Lösung für ein mit dem Prozess in Beziehung stehendes Steuerungsproblem zu bestimmen;

e) Steuern des Prozesses unter Verwendung der approximativen Lösung; und

f) Wiederholen der Schritte (b) bis (e).

2. Verfahren nach Anspruch 1, bei dem das Modell (10) nichtlinear ist.

3. Verfahren nach Anspruch 1 oder 2, bei dem die lineare Approximation durch nummerische Störung des Modells (10) erzeugt wird.

4. Verfahren nach Anspruch 3, bei dem die lineare Approximation ein Problem der quadratischen Programmierung schafft, das gelöst wird, um die approximative Lösung für das Steuerungsproblem zu bestimmen.

5. Verfahren nach einem vorhergehenden Anspruch, bei dem die dadurch bestimmte approximative Lösung verwendet wird, um eine präzisere Lösung zu bestimmen.

6. Verfahren nach einem vorhergehenden Anspruch, bei dem das Modell (10) des ersten Prinzips verwendet wird, um eine Steuerungsantwort zu berechnen.

7. Verfahren nach einem vorhergehenden Anspruch, bei dem die Erzeugung der linearen Approximation für das Modell (10) unter Verwendung neuer Eingangsdaten wie erforderlich wiederholt wird.

8. Verfahren nach einem vorhergehenden Anspruch, bei dem der Prozess (2) ein Polymerisationsprozess ist.

9. Verfahren nach Anspruch 8, bei dem der Prozess (2) einen Übergang von der Produktion einer ersten Polymerbeschaffenheit zu einer zweiten Polymerbeschaffenheit umfasst, wobei der Übergang automatisch gesteuert wird.

10. Steuervorrichtung zum Steuern eines Prozesses (2), die eine Steuereinheit (1), Eingabe- und Ausgabemittel sowie ein Modell (10) umfasst, wobei

a) das Modell ein dem Prozess entsprechen-

den des Grundmodell ist;

b) Mittel vorgesehen sind, die wiederholt Daten eingeben, die die momentanen und die gewünschten künftigen Prozessbedingungen beschreiben;

c) Mittel vorgesehen sind, die eine lineare Approximation für das Modell berechnen, das für jede der Eingangsbedingungen gültig ist;

d) Mittel vorgesehen sind, die jede lineare Approximation verwenden, um eine approximative Lösung für ein mit dem Prozess in Beziehung stehendes Steuerungsproblem zu bestimmen;

e) Mittel vorgesehen sind, die Ausgangssignale erzeugen, um den Prozess unter Verwendung der Lösung des obigen Teils (d) zu steuern.

11. Steuervorrichtung zum Steuern eines Prozesses, die so beschaffen ist, dass sie gemäß dem Verfahren nach einem der Ansprüche 1 bis 9 arbeitet.

12. Prozess zum Erzeugen eines Produkts, das das Verfahren und/oder die Vorrichtung nach einem vorhergehenden Anspruch verwendet.

**Revendications**

1. Procédé de commande d'un processus (2) comprenant les étapes consistant à :

a) générer un modèle de premier principe (10) correspondant au processus ;

b) introduire des données (b, c) décrivant les conditions du processus actuelles et souhaitées à l'avenir ;

c) utiliser lesdites données, générant une approximation linéaire vers le modèle qui est valide pour lesdites conditions actuelles ;

d) utiliser ladite approximation linéaire pour déterminer une solution approximative à un problème de commande en relation avec le processus ;

e) commander le processus en utilisant la dite solution approximative ; et

f) répéter les étapes (b) à (e).

2. Procédé selon la revendication 1, dans lequel le modèle (10) est non linéaire.

3. Procédé comme selon les revendications 1 ou 2, dans lequel l'approximation linéaire est générée par une perturbation numérique du modèle (10).

4. Procédé selon la revendication 3, dans lequel l'approximation linéaire présente un problème de programmation quadratique qui est résolu pour déterminer la solution approximative au problème de commande.

**5.** Procédé selon l'une quelconque des revendications précédentes dans lequel la solution approximative déterminée de cette façon est utilisée pour déterminer une solution plus précise.

**6.** Procédé selon l'une quelconque des revendications précédentes dans lequel le modèle de premier principe (10) est utilisé pour calculer une réponse de commande.

**7.** Procédé selon l'une quelconque des revendications précédentes dans lequel la génération d'une approximation linéaire vers le modèle (10) est répétée comme demandé en utilisant de nouvelles données d'entrée.

**8.** Procédé selon l'une quelconque des revendications précédentes dans lequel le processus (2) est un processus de polymérisation.

**9.** Procédé selon la revendication 8 dans lequel le processus (2) comprend une transition de la production de polymère de première catégorie vers un polymère de seconde catégorie, la transition étant commandée automatiquement.

**10.** Appareil de commande pour commander un processus (2) comprenant un dispositif de commande (1), un moyen d'entrée et de sortie et un modèle (10), dans lequel :

a) le dit modèle est un modèle fondamental correspondant au processus ;
b) le moyen est fourni pour l'introduction répétée des données décrivant les conditions du processus actuelles et souhaitées à l'avenir ;
c) le moyen est fourni pour le calcul d'une approximation linéaire vers le modèle qui est valide pour chacune des dites conditions d'entrée ;
d) le moyen est fourni pour l'utilisation de chaque dite approximation linéaire pour déterminer une solution approximative à un problème de commande en relation avec le processus ;
e) le moyen est fourni pour la génération de signaux de sortie afin de commander le processus en utilisant la solution de la partie d) ci-dessus.

**11.** Appareil de commande pour commander un processus qui est disposé pour fonctionner selon le procédé de l'une quelconque des revendications 1 à 9.

**12.** Processus pour la production d'un produit qui utilise le procédé et/ou l'appareil selon l'une quelconque

des revendications précédentes.

# FIG. 1

TYPICAL MPC CONTROLLER CONFIGURATION

EP 1 264 224 B1

# FIG. 2

TYPICAL MPC CONTROLLER STRUCTURE

EP 1 264 224 B1

# FIG. 3

FLOWCHART FOR MPC CONTROLLER

```
┌─────────────────────────────────┐
│       MAIN PROGRAM START        │
└─────────────────────────────────┘
                │
                ▼
┌─────────────────────────────────┐
│       INITIALISE CONTROLLER     │
└─────────────────────────────────┘
                │
                ▼
┌─────────────────────────────────┐                              a
│     WHILE NO HALT REQUEST DO     │──────────────────────────┐
└─────────────────────────────────┘                          │
                                                              ▼
                            b  ┌──────────────────────────────────┐
                               │  READ / VALIDATE SETPOINTS AND    │
                               │  CONSTRAINTS FROM OPERATOR         │
                               │  DISPLAY                           │
                               └──────────────────────────────────┘
                                              │
                            c  ┌──────────────────────────────────┐
                               │  READ AND VALIDATE PROCESS        │
                               │  MEASUREMENTS                      │
                               └──────────────────────────────────┘
                                              │
                            d  ┌──────────────────────────────────┐
                               │  READ MODEL PARAMETERS AND        │
                               │  TUNING PARAMETERS                 │
                               └──────────────────────────────────┘
                                              │
                            e  ┌──────────────────────────────────┐
                               │  UPDATE CONTROLLER SETTINGS       │
                               │  BASED ON NEW INPUT                │
                               └──────────────────────────────────┘
                                              │
                            f  ┌──────────────────────────────────┐
                               │  MAKE MODEL CALCULATION OF        │
                               │  CURRENT PROCESS CONDITIONS        │
                               └──────────────────────────────────┘
                                              │
                            g  ┌──────────────────────────────────┐
                               │  MAKE CORRECTION OF               │
                               │  CALCULATIONS AND MODEL            │
                               │  PARAMETERS COMPARING              │
                               │  MEASURED AND CALCULATED           │
                               │  CONDITIONS                        │
                               └──────────────────────────────────┘
                                              │
                            h  ┌──────────────────────────────────┐
                               │  RUN THE CONTROLLER ALGORITHM     │
                               │  (SEE ATTACHMENT)                  │
                               └──────────────────────────────────┘
                                              │
                            i  ┌──────────────────────────────────┐
                               │  SET A VALIDITY FLAG BASED        │
                               │  ON DATA VALIDATION                │
                               └──────────────────────────────────┘
                                              │
                          j,k  ┌──────────────────────────────────┐
                               │  UPDATE DATABASE / CONTROL        │
                               │  SYSTEM WITH CALCULATED VALUES     │
                               └──────────────────────────────────┘
                                              │
                            l  ┌──────────────────────────────────┐
                               │  SLEEP UNTIL THE CALCULATIONS ARE │
                               │  SCHEDULED TO WAKE UP              │
                               └──────────────────────────────────┘
                                              │
┌─────────────────────────────────┐          │
│          END WHILE              │◄─────────┘
└─────────────────────────────────┘
                │
                ▼
┌─────────────────────────────────┐
│     CLEAN UP AND TERMINATE      │
└─────────────────────────────────┘
```

# FIG. 4

FLOWCHART FOR MPC CONTROLLER

```
        ┌─────────────────────────────────┐
        │  IF CONTROL ACTION SELECTED     │
        └─────────────────────────────────┘
                       │
        ┌─────────────────────────────────┐
   h1   │  CREATE A NEW LINEAR            │
        │  APPROXIMATION OF THE PHYSICAL  │
        │  MODEL                          │
        └─────────────────────────────────┘
                       │
        ┌─────────────────────────────────┐       YES (NORMAL CASE)
        │           BEGIN                 │──────────────────┐
        └─────────────────────────────────┘                 │
                                                             │
                       ┌─────────────────────────────────────┐
                       │  CALCULATE THE FUTURE              │ ─h2
                       │  RESPONSE BY USING THE NONLINEAR   │
                       │  DYNAMIC MODEL WITH THE PRESENT    │
                       │  INPUT SCENARIO                    │
                       └─────────────────────────────────────┘
                       │
                       ┌─────────────────────────────────────┐
                       │  SET CONSTRAINTS ON                │ ─h3
                       │  INPUT AND OUTPUT                  │
                       └─────────────────────────────────────┘
                       │
                       ┌─────────────────────────────────────┐
                       │  CALCULATE THE HESSIAN MATRIX      │ ─h4
                       │  USING THE LINEAR MODEL, AND       │
                       │  CALCULATE THE DEVIATION VECTOR    │
                       └─────────────────────────────────────┘
                       │
                       ┌─────────────────────────────────────┐
                       │  DO A QP SOLUTION, USING HESSIAN   │ ─h5
                       │  MATRIX                            │
                       └─────────────────────────────────────┘
                       │
                       ┌─────────────────────────────────────┐
                       │  IF INFEASIBLE SOLUTION,           │ ─h6
                       │  INTRODUCE SLACK VARIABLES AND     │
                       │  REDO THE QP CALCULATION           │
                       └─────────────────────────────────────┘
                       │
       NO (NORMALLY THE      ┌───────────────────────────────┐
       FIRST ITERATIONS)     │  IF THE SOLUTION HAS CONVERGED: │ ─h7
                             └───────────────────────────────┘
                                         │  YES (NORMALLY AFTER
                                         │  SOME ITERATIONS)
                       ┌─────────────────────────────────────┐
                       │  SET THE FIRST PART OF THE         │ ─h8
                       │  SCENARIO TO THE CONTROL VECTOR    │
                       └─────────────────────────────────────┘
                       │
                       ┌─────────────────────────────────────┐
                       │           RETURN                   │
                       └─────────────────────────────────────┘
```

# FIG. 5

PUMPING OWER (kw) FOR POLYPROPYLENE REACTOR

# FIG. 6

## FIG. 7

## FIG. 8

THE LOWEST CURVE (Ap) IS THE RATE CONSTANT CALCULATED
COMPARING THE MEASURED AND CALCULATED RATE.

# FIG. 9

# FIG. 10

## FIG. 11